(19) Europäisches Patentamt

European Patent Office

Office européen des brevets

(11) **EP 1 016 628 A1**

(12) **EUROPÄISCHE PATENTANMELDUNG**

(43) Veröffentlichungstag:
**05.07.2000 Patentblatt 2000/27**

(51) Int. Cl.⁷: **C01F 11/18**

(21) Anmeldenummer: **99125609.0**

(22) Anmeldetag: **22.12.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **02.01.1999 DE 19900021**

(71) Anmelder:
**Solvay Soda Deutschland GmbH**
**30173 Hannover (DE)**

(72) Erfinder:
• **Kinnen, Andreas, Dr.**
**46509 Xanten (DE)**

• **Dillenburg, Helmut, Dr.**
**47495 Rheinberg (DE)**
• **Schinninger, Kurt, Dr.**
**5400 Hallein (AT)**
• **Nover, Christoph, Dr.**
**47495 Rheinberg (DE)**

(74) Vertreter:
**Lauer, Dieter, Dr. et al**
**Solvay Pharmaceuticals GmbH,**
**Hans-Böckler-Allee 20**
**30173 Hannover (DE)**

(54) **Verfahren zur Herstellung von gefälltem Calciumcarbonat**

(57)    Die Erfindung betrifft ein Verfahren zur Herstellung von gefälltem Calciumcarbonat durch Einleiten von $CO_2$ in Kalkmilch. Erfindungsgemäß wird die Kalkmilch zunächst gemahlen und danach das $CO_2$ zur Fällung des Calciumcarbonates eingeleitet.

EP 1 016 628 A1

**Beschreibung**

Die Erfindung betrifft ein Verfahren zur Herstellung von gefälltem Calciumcarbonat, das als funktioneller Füllstoff geeignet ist und sich durch definierte Eigenschaften auszeichnet. Ein typisches Anwendungsgebiet ist seine Verwendung als Füllstoff in Plastisolen, wie z. B. Unterbodenschutzmassen für Automobile.

Das gefällte Calciumcarbonat ist hier in der Lage, das Fließverhalten der Plastisole zu steuern. So können durch Einsatz der jeweilig geeigneten Calciumcarbonate Plastisole mit sehr unterschiedlichem Fließverhalten hergestellt werden. Je nach Anwendungszweck können hohe, mittlere oder niedrige Fließgrenzen gewünscht sein. Als ein typisches Charakteristikum für die anwendungstechnische Eignung von Calciumcarbonaten als Füllstoff wird üblicherweise die Fließgrenze nach Bingham im Weichmachergemisch angegeben. Die Fähigkeit des gefällten Calciumcarbonates die Fließgrenzen zu steuern wird unter anderem durch die Beschaffenheit des für die Herstellung der Kalkmilch verwendeten Branntkalkes und den Löschvorgang beeinflußt.

Feindisperses Calciumcarbonat wird entweder aus natürlich vorkommenden Rohstoffen durch mechanische Aufbereitung oder auf chemischem Wege z. B. durch Fällung hergestellt.

Üblicherweise wird gefälltes Calciumcarbonat durch Einleiten von $CO_2$ in Kalkmilch hergestellt

$$Ca(OH)_2 + CO_2 \rightarrow CaCO_3 + H_2O$$

Die Eigenschaften des gefällten Calciumcarbonates sind z. B. abhängig von der chemischen Zusammensetzung des eingesetzten Kalksteines oder den Brennbedingungen.

Zur Herstellung von gefälltem Calciumcarbonat wird vorzugsweise sogenannter Weichbrannt eingesetzt. Hierzu wird Kalkstein bei einer Temperatur von 1000 bis 1250 °C gebrannt.

Zur Charakteristik des Branntkalkes wird u. a. seine Fähigkeit, mit Wasser zu reagieren herangezogen. Gemessen wird der sogenannte VEC-Wert (Vélocité d'Extinction de Chaux). Hierbei wird die Aufheizgeschwindigkeit einer definierten Wasser-Branntkalkmischung gemessen. Typische VEC-Werte für Branntkalk, der für die Herstellung von gefälltem Calciumcarbonat geeignet ist, liegen oberhalb 3 °C/min.

Zur Herstellung der Kalkmilch wird der Branntkalk z. B. in einer Löschtrommel mit Wasser zur Reaktion gebracht, wobei sich eine $Ca(OH)_2$-Suspension, die sogenannte Kalkmilch bildet. Die Kalkmilch hat üblicherweise einen Feststoffgehalt von 70 bis 220 g/l $Ca(OH)_2$, eine Viskosität von 30 bis 1500 mPas und einen mittleren Teilchendurchmesser unter 50 µm.

Kalkmilch wird z. B. zur Neutralisation von Abwasser, zur Herstellung von Soda oder gefälltem Calciumcarbonat verwendet.

Ein Nachteil der bisher bekannten Verfahren zur Herstellung von gefälltem Calciumcarbonat ist, daß dessen anwendungstechnische Eigenschaften, insbesondere als rheologisches Additiv, wegen dessen mittlerer Korngröße, Korngrößenverteilung und Partikelform bisher nur ungenügend steuerbar sind.

Die US-PS 3,920,800 beschreibt ein Verfahren zur Herstellung von gefällten Calciumcarbonat hoher Reinheit. Gemäß dem beschriebenen Verfahren wird ein wäßriger Calciumhydroxidschlamm (Kalkmilch) bei einer Temperatur von maximal 100 °C in Gegenwart von $CO_2$ gemahlen. Das durch die Reaktion des Calciumhydroxids mit dem $CO_2$ gebildete Calciumcarbonat ist Calciumhydroxidfrei. Die Partikelgröße des Calciumcarbonates wird über die Temperatur während des Mahlprozesses gesteuert. Bei Temperaturen von ca. 30 °C werden sehr kleine Partikel, bei Temperaturen von ca. 80 °C werden größere Calciumcarbonatpartikel erhalten.

Aufgabe der Erfindung ist die Herstellung von gefälltem Calciumcarbonat (CCP) mit definierten und reproduzierbaren Eigenschaften.

Erfindungsgemäß wird die Aufgabe dadurch gelöst, daß die Kalkmilch gemahlen wird, bevor das $CO_2$ zur Fällung des Calciumcarbonates eingeleitet wird..

Zur Mahlung der Kalkmilch können an sich bekannte Mühlen verwendet werden. Vorzugsweise werden Perlmühlen eingesetzt. Als Mahlperlen eignen sich insbesondere Zirkonoxid-Mahlperlen mit einem Durchmesser von 0,4 bis 2 mm.

Das Mahlergebnis wird durch die Feinheit der Perlen stark beeinflußt.

Der Mahleffekt wird außerdem durch die Drehzahl der Mühle, die Verweilzeit der Kalkmilch in der Mühle und den sich daraus ergebenden spezifischen Energieeintrag gesteuert.

Als Meßgröße für den Mahlerfolg kann auch die mittlere Teilchengröße der $Ca(OH)_2$-Partikel in der Kalkmilch oder die Viskosität der Kalkmilch gemessen werden.

Der Verlauf der Naßmahlung kann also durch Messung der Kornverteilung des Calciumhydroxids oder durch Messung der Viskosität der Kalkmilch bei definierter Konzentration und Temperatur verfolgt werden.

Erfindungsgemäß wird die Viskosität der Kalkmilch gemessen und zur Steuerung der Mühle genutzt. Die Viskosität ist problemlos z. B. kontinuierlich zu messen und über einen entsprechenden Regelkreis kann automatisch der Mühlendurchsatz oder die Drehzahl der Mühle und damit die resultierende Kalkmilchqualität gesteuert werden.

In einer Ausführungsform der Erfindung wird die Kalkmilch bis zu einer Viskosität von max. 2500 mPas gemahlen. Eine höhere Viskosität sollte vermieden werden, da sonst die Eintragung des Fällgases nicht optimal möglich ist.

Es ist also im Sinne der Erfindung die Viskosität der gemahlenen Kalkmilch so einzustellen, daß die Kalkmilch gut fließfähig ist, damit das Fällgas homogen dispergiert werden kann. Durch die Mahlung ist es außerdem möglich, die Viskosität der Kalkmilch so einzustellen, daß Calciumcarbonat mit jeweils gewünschten anwendungstechnischen Eigenschaften, insbesondere als rheologisches Additiv, hergestellt werden kann. Je nach Anwendungszweck kann somit CaCO$_3$, das als Mischungsbestandteil mit hoher Funktionalität für z. B. Polymere, Polymerzubereitungen, Kunststoffe, Überzugsmassen, Dichtungsmassen, Papier oder Farben, insbesondere Druckfarben geeignet ist in gleichbleibender Qualität bereitgestellt werden.

Die Kalkmilch wird nach der Mahlung einem Behälter zugeführt, in den CO$_2$ zur Fällung des Calciumcarbonates eingeleitet und homogen in der Kalkmilch dispergiert wird.

Es wurde überraschend gefunden, daß die Eigenschaften des gefällten Calciumcarbonates reproduzierbar sind, wenn die Kalkmilch zunächst gemahlen wird, und danach CO$_2$ zur Fällung des Calciumcarbonates eingeleitet wird.

Vergleicht man gefälltes Calciumcarbonat aus ungemahlener mit der aus gemahlener Kalkmilch, so fällt auf, daß die Mahlung einen Einfluß auf die Reaktionsgeschwindigkeit, auf den mittleren Teilchendurchmesser des CCP und auf die anwendungstechnischen Eigenschaften des CCP hat.

Es wurde gefunden, daß eine abnehmende Teilchengröße in der Kalkmilch auch eine Abnahme des mittleren Teilchendurchmessers des CCP nach sich zieht.

Es wurde weiterhin gefunden, daß durch Verwendung der erfindungsgemäß gemahlenen Kalkmilch, die Fälldauer um ca. 20 % gesenkt wird.

Durch die erfindungsgemäße viskositätsgesteuerte Naßmahlung der Kalkmilch ist es möglich, die Fließgrenze der CCP-gefüllten Plastisole signifikant zu beeinflussen, also gezielt einzustellen. Es wurde gefunden, daß die Fließgrenze eine Funktion, der bei der Mahlung eingetragenen spezifischen Energie, bzw. der Viskosität der Kalkmilch nach der Mahlung ist. Es wurde also gefunden, daß die Eigenschaften des CCP durch die gezielt einstellbaren Viskositäten der Kalkmilch reproduzierbar beeinflußt werden können.

Die unerwünschte Beeinflussung der Eigenschaften des CCP durch undefinierte Schwankungen der Beschaffenheit des Branntkalkes und des Löschvorganges wird durch die erfindungsgemäße Mahlung der Kalkmilch aufgehoben.

Die nachfolgenden Beispiele sollen die Erfindung erläutern, jedoch nicht einschränken.

**Beispiel 1 - 6:**

Branntkalk wurde in einer Löschtrommel gelöscht:

| Stückelung: | 2 - 5 cm |
|---|---|
| VEC: | 4,8 °C/min |

Die resultierende Kalkmilch wurde gemahlen
und charakterisiert:

| Feststoffgehalt | 150 g/l |
|---|---|
| Mittlerer Teilchendurchmesser D50: | 4,4 μm |

Mahlbedingungen:

Horizontale Rührwerkskugelmühle

Mahlkammervolumen 5 l

22 kW Motorleistung

Mahlkörper:

Kugeln ausZirkonsilikat
Durchmesser 1,0 - 1,6 mm,
Eingefülltes Volumen: 4,8 l

Die Versuche werden bei konstanter Drehzahl von 1990 u/min durchgeführt. Die Verweilzeit der Kalkmilch in der Mühle wurde variiert. Daraus ergaben sich verschiedene spezifische Energieeintrage.

Aus der so gemahlenen Kalkmilch wurde durch Einleiten von $CO_2$-haltigem Gas Calciumcarbonat hergestellt:

Fällbedingungen:

| Fälltemperatur: | 18 °C |
|---|---|
| $CO_2$-Konzentration im Fällgas: | 30 Vol.-% |
| Gasstrom: | 1 $m^3$/h pro 10 l Kalkmilch |
| Fälldauer: | siehe Tabelle |
| Nachbehandlung: | 2 % Fettsäure |

| | Mahlung | Kalkmilch | Kalkmilch | CCP-Fällung | CCP |
|---|---|---|---|---|---|
| Beispiel | Spez. Energie (kWh/t) bezogen auf Trockenprodukt | Visk. (mPas) | D50 (µm) | Fälldauer (min) | CCPTeilchendurchmesser dp (nm) |
| 1 | 0 | 45 | 4,4 | 98 | 70 |
| 2 | 23 | 50 | 4,4 | 94 | 71 |
| 3 | 31 | 105 | 3,2 | 92 | 66 |
| 4 | 113 | 135 | 2,8 | 83 | 62 |
| 5 | 254 | 860 | 2,1 | 79 | 63 |
| 6 | 307 | 1120 | 1,8 | 77 | 61 |

Es wird deutlich, daß durch die Naßmahlung die Viskosität der Kalkmilch und der mittlere Teilchendurchmesser der Kalkmilch gezielt gesteuert werden können. Dadurch kann die Fälldauer von CCP bis zu 20 % gesenkt werden. Die Teilchendurchmesser von CCP werden reproduzierbar eingestellt.

**Beispiel 7 - 12:**

Herstellung einer Unterbodenschutzmasse

| | |
|---|---|
| Weichmacher, Dioctylphthalat | 55 g |
| Weichmacher, Diisononylphthalat | 60 g |
| verpastbares PVC, Solvic 374 MIB | 70 g |
| verpastbares PVC, Solvic 266 SF | 30 g |
| $CaCO_3$, gemäß Beispiel 1 - 6, fettsäuregecoated | 70,0 g |
| UV-Stabilisator, IRGASTAB 17 MOK | 2,0 g |
| Haftvermittler, Euretek 505 | 4,0 g |
| Trockenmittel, Calciumoxid | 5,0 g |

| Beispiel | Fließgrenze (Pa) |
|---|---|
| 7 | 40 |
| 8 | 48 |
| 9 | 80 |
| 10 | 89 |
| 11 | 157 |
| 12 | 200 |

CCP aus den Beispielen 1 - 6 wurde jeweils zur Herstellung von Unterbodenschutzmassen entsprechend der beschriebenen Formulierung eingesetzt. Es wird deutlich, daß durch die Naßmahlung der Kalkmilch auch die Fließgrenze des CCP-gefüllten Plastisols gezielt gesteuert werden kann.

**Beispiel 13:**

Herstellung einer Offsetdruckfarbe

| | |
|---|---|
| Pigment, geflusht, Eurolith Blue | 25,0 Gew.-% |
| $CaCO_3$, gemäß Beispiel 4, fettsäurege-coatet | 15,0 Gew.-% |
| Drucköl, Haltermann, PKWF 4/7 | 12,0 Gew.-% |
| Bindemittel, Uroset | 48,0 Gew.-% |

**Ergebnis**

| Fließgrenze | 31 Pa |
|---|---|
| Viskosität bei Schergeschwindigkeit 3/sec | 9,4 Pas |
| Farbtiefe C | 53 |
| Glanz 60° | 71 % |

**Beispiel 14:**

Herstellung von Polyurethanmassen, 2-Komponentensystem

| Polyol, Desmophen 1150 | 150 g |
|---|---|
| $CaCO_3$ gemäß Beispiel 6 fettsäurege-coatet | 60 g |
| Titandioxidpigment (Rutil), Tiona Rcl-535 | 3 g |
| Trockenpaste, Baylith L-Paste | 15 g |
| Haftvermittler, Acronal 700L | 1 g |
| Weichmacher, Mesamoll II | 35 g |
| Polyurethan-Aktivator | 1 g |
| Isocyanat | 3 g |

**Ergebnis**

| Fließgrenze nach Bingham | 220 Pa |
|---|---|
| Viskosität bei Schergeschwindigkeit (100/sec) | 6,1 Pas |
| Pot life time | 26 min |
| Haftung | gut |
| Dispergierqualität/Grindometer | <35 $\mu$m |

**Beispiel 15:**

Herstellung von Silikonmassen

Für die Prüfung wurde eine nichtaushärtende Silikonmasse hergestellt, die einem 2-Komponentensystem entspricht, wobei der zum Aushärten erforderliche Katalysator nicht zugegeben wurde.

| Silikon-Polymer | 60 g |
|---|---|
| CaCO$_3$ gemäß Beispiel 2, fettsäurege-coatet | 38 g |
| Weichmacher | 2 g |

**Ergebnis**

| Fließgrenze nach Casson | 900 Pa |
|---|---|
| Viskosität bei Schergeschwindigkeit 5/s | 280 Pas |
| Dispergierqualität/Grindometer | <35 μm |

**Patentansprüche**

1. Verfahren zur Herstellung von gefälltem Calciumcarbonat mit reproduzierbaren anwendungstechnischen Eigenschaften durch Einleiten von CO$_2$ in Kalkmilch, dadurch gekennzeichnet, daß die Kalkmilch einer gezielten Mahlbehandlung unterzogen wird und danach CO$_2$ zur Fällung des Calciumcarbonates eingeleitet wird.

2. Verfahren zur Herstellung von gefälltem Calciumcarbonat nach Anspruch 1, dadurch gekennzeichnet, daß durch die gezielte Mahlung die Qualität der Kalkmilch gesteuert wird, indem die Viskosität der Kalkmilch während der Mahlung kontinuierlich gemessen wird und als Meßgröße zur Steuerung des Mahlprozesses verwendet wird.

3. Verfahren zur Herstellung von gefälltem Calciumcarbonat nach Anspruch 1 und 2, dadurch gekennzeichnet, daß durch die gezielte Mahlung Kalkmilch mit einer Viskosität von max. 2500 mpas hergestellt wird.

Europäisches
Patentamt

## EUROPÄISCHER RECHERCHENBERICHT

Nummer der Anmeldung

EP 99 12 5609

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 480 587 A (ECC INT LTD) 15. April 1992 (1992-04-15) * Seite 3, Zeile 33 - Zeile 35; Ansprüche; Beispiel 4 * | 1-3 | C01F11/18 |
| X | EP 0 140 644 A (OKUTAMA KOGYO KK) 8. Mai 1985 (1985-05-08) * Seite 5, Absatz 2 - Seite 6, Absatz 1; Ansprüche * | 1-3 | |
| A | PATENT ABSTRACTS OF JAPAN vol. 017, no. 674 (C-1140), 10. Dezember 1993 (1993-12-10) & JP 05 221634 A (HARIMA CERAMIC CO LTD), 31. August 1993 (1993-08-31) * Zusammenfassung * | | |
| D,A | US 3 920 800 A (HARRIS DWIGHT L) 18. November 1975 (1975-11-18) | | |
| A | US 4 888 160 A (KOSIN JOHN A ET AL) 19. Dezember 1989 (1989-12-19) | | RECHERCHIERTE SACHGEBIETE (Int.Cl.7) |
| | | | C01F |

Der vorliegende Recherchenbericht wurde für alle Patentansprüche erstellt

| Recherchenort | Abschlußdatum der Recherche | Prüfer |
|---|---|---|
| DEN HAAG | 4. April 2000 | Zalm, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument

EPO FORM 1503 03.82 (P04C09)

EP 1 016 628 A1

**ANHANG ZUM EUROPÄISCHEN RECHERCHENBERICHT
ÜBER DIE EUROPÄISCHE PATENTANMELDUNG NR.**          EP 99 12 5609

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2000

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0480587 | A | 15-04-1992 | GB | 2248229 | A | 01-04-1992 |
| | | | AT | 114143 | T | 15-12-1994 |
| | | | AU | 649721 | B | 02-06-1994 |
| | | | AU | 8526291 | A | 28-04-1992 |
| | | | CA | 2087857 | A,C | 28-03-1992 |
| | | | DE | 69105183 | D | 22-12-1994 |
| | | | DE | 69105183 | T | 24-05-1995 |
| | | | ES | 2064047 | T | 16-01-1995 |
| | | | FI | 930143 | A | 14-01-1993 |
| | | | WO | 9206038 | A | 16-04-1992 |
| | | | JP | 2857806 | B | 17-02-1999 |
| | | | JP | 6501235 | T | 10-02-1994 |
| | | | KR | 143881 | B | 15-07-1998 |
| | | | NO | 303219 | B | 15-06-1998 |
| | | | NZ | 239759 | A | 25-11-1992 |
| | | | US | 5342600 | A | 30-08-1994 |
| EP 0140644 | A | 08-05-1985 | JP | 1457730 | C | 09-09-1988 |
| | | | JP | 60086067 | A | 15-05-1985 |
| | | | JP | 63006494 | B | 10-02-1988 |
| | | | AU | 571898 | B | 28-04-1988 |
| | | | AU | 3412684 | A | 26-04-1985 |
| | | | KR | 8701276 | B | 30-06-1987 |
| | | | US | 5075093 | A | 24-12-1991 |
| JP 05221634 | A | 31-08-1993 | KEINE | | | |
| US 3920800 | A | 18-11-1975 | KEINE | | | |
| US 4888160 | A | 19-12-1989 | US | 5338777 | A | 16-08-1994 |
| | | | US | 5055284 | A | 08-10-1991 |

Für nähere Einzelheiten zu diesem Anhang : siehe Amtsblatt des Europäischen Patentamts, Nr.12/82

9